(19) Europäisches Patentamt / European Patent Office / Office européen des brevets

(11) **EP 2 869 088 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(51) Int Cl.:
*G01T 1/02* *(2006.01)*    *G01T 7/00* *(2006.01)*

(21) Anmeldenummer: **14191458.0**

(22) Anmeldetag: **03.11.2014**

(54) **Verfahren zur Bereitstellung einer Warnung vor strahlendosisrelevanten Weltraumwetterereignissen auf Reiseflughöhen**

Method for providing a warning of radiation dose relevant space weather events at cruising altitudes

Procédé de préparation d'un avertissement contre des événements significatifs pour les doses de radiation sur un itinéraire de vol

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2013   DE 102013222315**

(43) Veröffentlichungstag der Anmeldung:
**06.05.2015   Patentblatt 2015/19**

(73) Patentinhaber: **Deutsches Zentrum für Luft- und Raumfahrt e.V.**
**51147 Köln (DE)**

(72) Erfinder:
• **Meier, Matthias**
  **53639 Königswinter (DE)**
• **Matthiä, Daniel**
  **50969 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
• Matthew P. Sattler: "Prediction of flight-level radiation hazards due to solar energetic protons", Air Force Institurte of Technology , Januar 2006 (2006-01), XP002736196, Gefunden im Internet: URL:www.dtic.mil/cgi-bin/GetTRDoc?AD=ADA45 0797 [gefunden am 2015-02-18]
• P. LANTOS ET AL: "History of the solar particle event radiation doses on-board aeroplanes using a semi-empirical model and Concorde measurements", RADIATION PROTECTION DOSIMETRY, Bd. 104, Nr. 3, 2. Mai 2003 (2003-05-02), Seiten 199-210, XP055170541, ISSN: 0144-8420, DOI: 10.1093/oxfordjournals.rpd.a006183
• MERTENS C J ET AL.: "NAIRAS aircraft radiation model development, dose climatology, and initial validation", SPACE WEATHER, Bd. 11, Nr. 10, Oktober 2013 (2013-10), Seiten 603-635, XP002736197, DOI: 10.1002/swe.20100
• JENNIFER MEEHAN ET AL: "Workshop Addresses Aviation Community", SPACE WEATHER: THE INTERNATIONAL JOURNAL OF RESEARCH AND APPLICATIONS, Bd. 10, 22. August 2012 (2012-08-22), XP055170509, DOI: 10.1029/2012SW000828

**Beschreibung**

Die Erfindung betrifft ein Verfahren zur Bereitstellung von Handlungsempfehlungen von Luftverkehrsgesellschaften für das Flugpersonal bei einer Warnung vor strahlendosisrelevanten Weltraumwetterereignissen auf Reiseflughöhen.

Die Strahlenexposition auf den Reiseflughöhen der Zivilluftfahrt (FL280 - FL410) ist aufgrund der galaktischen, kosmischen Strahlung im Vergleich mit terrestrischen Expositionen um bis zu etwa einem Faktor 100 erhöht. Es besteht eine starke Abhängigkeit des Strahlungsfeldes von der lokalen Abschirmwirkung des Erdmagnetfeldes, beispielsweise parametrisiert durch den geomagnetischen Breitengrad. Einen weiteren Einfluss auf dieses Strahlungsfeld hat die Variation des interplanetaren Magnetfelds durch den solaren Zyklus. Diese verschiedenen, unabhängigen Einflüsse führen zu einem in Komposition und Energieverteilung sehr komplexen Strahlungsfeld auf Reiseflughöhen.

Neben der galaktischen kosmischen Strahlung gibt es innerhalb des solaren Zyklus auch zeitweise Strahlungsbeiträge durch die solare kosmische Strahlung, wenn durch Strahlungsausbrüche auf der Sonne, sogenannte SPEs (engl. Abk. für Solar Particle Events), Teilchen erzeugt werden, die energiereich genug sind, um die Magnetosphäre und die oberen Schichten der Atmosphäre durchdringen zu können. Derartige Ereignisse sind durch sekundäre Wechselwirkungen der primären Strahlungskomponente mit Bestandteilen der Atmosphäre auch mit einem deutlichen Anstieg von entsprechenden Zählraten bodengebundener, die Intensität der kosmischen Strahlung messender Instrumente, so genannter GLEs (Ground Level Events bzw. Ground Level Enhancements), verbunden und treten innerhalb des solaren Zyklus mit erhöhter Wahrscheinlichkeit im abklingenden solaren Maximum auf.

Das Auftreten von Strahlungsausbrüchen auf der Sonne, die zu einer zusätzlichen Strahlenexposition auf Reiseflughöhen führen können, ist mit dem gegenwärtigen Stand der Technik und möglicherweise sogar prinzipiell nicht zuverlässig vorhersagbar. Dies liegt unter anderem daran, dass nur die hochenergetische Komponente (> 500 MeV/n) der bei einem solaren Strahlungsausbruch emittierten Teilchen hinreichend tief genug in die Atmosphäre eindringen kann.

Heutzutage informiert das Space Weather Prediction Center (SWPC) der USamerikanischen National Oceanic and Atmospheric Administration (NOAA) die Öffentlichkeit über die jeweils aktuelle Weltraumwettersituation und gibt über seine Homepage oder einen Benachrichtigungsdienst über Email entsprechende Warnungen heraus (http://www.swpc.noaa.gov/). Diesen Warnungen liegt als physikalische Bewertungsgröße der Fluss energiereicher Teilchen an der Position des GOES-13 Satelliten (Geostationary Operational Environmental Satellite) der NOAA zugrunde. Die Klassifizierung dieser Warnungen erfolgt durch eine Skala (S-Skala), deren Index durch den Exponenten des Flusses von Teilchen mit Energien oberhalb von 10 MeV zur Basis 10 gegeben ist. Diese Klassifizierung ist für eine Bewertung der Strahlungsumgebung in erdnahen Orbits grundsätzlich geeignet, wird aber auch auf Bewertungen im Bereich der Luftfahrt ausgedehnt. Dabei liegt allerdings unter Berücksichtigung des jeweiligen spektralen Index der Energieverteilung der einfallenden Teilchen im Normalfall der größte Anteil des Flusses signifikant unterhalb einer Energieschwelle für dosisrelevante Beiträge auf Reiseflughöhen. Insofern werden für dieses Szenario überwiegend Fehlalarme ausgelöst, die dann bei einigen Luftverkehrsgesellschaften zu unnötigen und kostenintensiven Maßnahmen führen.

In Ermangelung der Vorhersagbarkeit dosisrelevanter solarer Strahlungsbeiträge für die Luftfahrt können derartige Ereignisse erst nach der damit verbundenen Erhöhung der Strahlungsintensität erkannt werden. Dies ist grundsätzlich durch direkte und indirekte Methoden möglich. Einerseits kann die mit der Strahlenexposition auf Reiseflughöhen verbundene Dosisrate, sowohl die Energiedosisrate dD/dt als auch die Umgebungsäquivalentdosisrate dH*(10)/dt mit dafür geeigneten Dosimetern direkt in einem Luftfahrzeug gemessen werden. Andererseits sind dosisrelevante SPEs auch durch ein deutliches Ansprechen bodengebundener Messinstrumente (z.B. Neutronenmonitore) beobachtbar. Aus der Kombination der Messdaten verschiedener Instrumente können mit Strahlungsmodellen ebenfalls, nämlich wie bei einer direkten Messung, die entsprechenden Dosisraten abgeschätzt werden.

Wie oben bereits erwähnt, informiert das Space Weather Prediction Center der NOAA die Öffentlichkeit bei Weltraumwetterereignissen mit erhöhten Protonenflüssen, die an der Position des GOES-13 Satelliten gemessen werden. Die Klassifizierung entsprechender Warnungen erfolgt durch die S-Skala, deren Index durch den Exponenten des Flusses von Teilchen mit Energien oberhalb von 10 MeV zur Basis 10 gegeben ist. Da allerdings aufgrund der Energieverteilung in Verbindung mit der atmosphärischen Abschirmung der größte Teil des Flusses der einfallenden Teilchen im Normalfall signifikant unterhalb einer Energieschwelle für dosisrelevante Beiträge auf Reiseflughöhen liegt, werden für dieses Szenario überwiegend Fehlalarme ausgelöst, die dann bei einigen Luftverkehrsgesellschaften temporär zu unnötigen und kostenintensiven Maßnahmen führen. Dies hat bereits dazu geführt, dass diese isolierten, auf ungeeigneten physikalischen Parametern basierenden Warnungen von NOAA von einigen Luftverkehrsgesellschaften grundsätzlich ignoriert werden. Darüber hinaus liefert die zur Klassifizierung der Weltraumwetter-Ereignisse verwendete S-Skala nur einen globalen Warn-Parameter und beinhaltet keine Differenzierung hinsichtlich der tatsächlich geplanten bzw. geflogenen Route beispielsweise unter Berücksichtigung der entsprechenden lokalen geomagnetischen Abschirmung.

Es ist jedoch davon auszugehen, dass ungeachtet dessen bei den meisten Luftverkehrsgesellschaften ein Interesse bzw. ein Bedarf an zuverlässigen zeitnahen Warnungen vor dosisrelevanten Weltraumwetter-Ereignissen besteht.

Aufgabe der Erfindung ist es, ein Verfahren anzugeben, welches geeignet ist, eine zusätzliche, dosisrelevante Strahlungskomponente durch ein solares Teilchenereignis auf Reiseflughöhen zeitnah zu erkennen und anhand eines entsprechend an die Charakteristika des Strahlungsausbruchs angepassten Modells Informationen über die Strahlenexposition auf Reiseflughöhen sowohl als globale als auch als regionale Warnung an Nutzer und die Öffentlichkeit bereitzustellen. Dadurch wird beispielsweise für Luftverkehrsgesellschaften die Möglichkeit eröffnet, durch betriebliches Handeln im Ereignisfall unter Berücksichtigung operationeller Parameter geeignete Strahlenschutzmaßnahmen und eine Dosisreduzierung gemäß §94 Strahlenschutzverordnung (StrlSchV) umzusetzen.

Zur Lösung dieser Aufgabe wird mit der Erfindung ein Verfahren zur Bereitstellung von Handlungsempfehlungen von Luftverkehrsgesellschaften für das Flugpersonal bei einer Warnung vor strahlendosisrelevanten Weltraumwetterereignissen auf Reiseflughöhen vorgeschlagen, das versehen ist mit den Merkmalen des Anspruchs 1. Einzelne Ausgestaltungen der Erfindung sind Gegenstand der Unteransprüche.

Die Erfindung basiert auf der Kombination eines insbesondere quasi echtzeitfähigen Modells (Strahlentransportmodell oder andere Strahlenmodelle wie z.B. beschrieben in Daniel Matthiä: The radiation environment in the lower atmosphere - A numerical approach, Dissertation, 2009; I. Clairand et al, THE SIEVERT SYSTEM FOR AIRCREW DOSIMETRY, Radiation Protection Dosimetry (2009, Vol. 136, No. 4, pp. 282-285; D. Matthiä et al, Temporal and spatial evolution of the solar energetic particle event on 20 January 2005 and resulting radiation doses in aviation, Journal of Geophysical Research, Vol. 114, A08104, doi:10.1029/2009JA014125, 2009) zur Konstruktion des Energiespektrums der einfallenden solaren Teilchen anhand aktueller Messdaten aus verschiedenen Quellen, einem atmosphärischen Strahlungsmodell und einer dosisratenbasierten Skala, deren Index als Exponent zur Basis 2 zur Bereitstellung lokaler und abgeleiteter globaler Warnungen vor dosisrelevanten Weltraumwetter Ereignissen auf Reiseflughöhen besonders geeignet ist.

Als Datenquellen eignen sich beispielsweise satellitengestützte Messinstrumente und Neutronenmonitore verschiedener geografischer Positionen. Die aus dem Modell auf der Basis der Messdaten ermittelte Dosisratenabschätzung auf einem Gittermodell der Erdatmosphäre erlaubt eine quasi echtzeitfähige Bereitstellung der indexbasierten Warnungen als zuverlässige Grundlage zur Umsetzung entsprechend definierter betrieblicher Handlungsoptionen bei Luftverkehrsgesellschaften.

In vorteilhafter Ausgestaltung der Erfindung ist vorgesehen, dass als Vielfaches eine natürliche Zahl, insbesondere die Zahl 2 oder 3 gewählt wird.

In weiterer zweckmäßiger Ausgestaltung der Erfindung ist vorgesehen, dass zur Erfassung der Strahlungsdaten satelliten-, luft- und/oder bodengestützte Messinstrumente bereitgestellt werden.

In vorteilhafter Ausgestaltung der Erfindung kann vorgesehen sein, dass das Strahlungsmodell ein dynamisches Modell ist, das quantitative Information bezüglich der Strahlungsintensität und deren zeitliche Veränderung enthält.

In weiterer zweckmäßiger Ausgestaltung der Erfindung ist vorgesehen, dass anhand des Strahlungsmodells aus den Strahlungsdaten auf ein Energiespektrum der Teilchen eines strahlendosisrelevanten Ereignisses geschlossen wird.

In weiterer vorteilhafter Ausgestaltung der Erfindung kann das Verfahren dergestalt angewendet werden, dass der Index für den betreffenden Bereich innerhalb der Erdatmosphäre als lokaler Warnindex verwendet wird und/oder dass der maximale Index der Indices für eine Vielzahl von Bereichen der Erdatmosphäre, insbesondere für sämtliche Bereiche der Erdatmosphäre als globaler Warnindex verwendet wird.

Die Erfindung wird nachfolgend im Einzelnen anhand von Ausführungsbeispielen und der Zeichnung beschrieben. Dabei zeigt/zeigen:

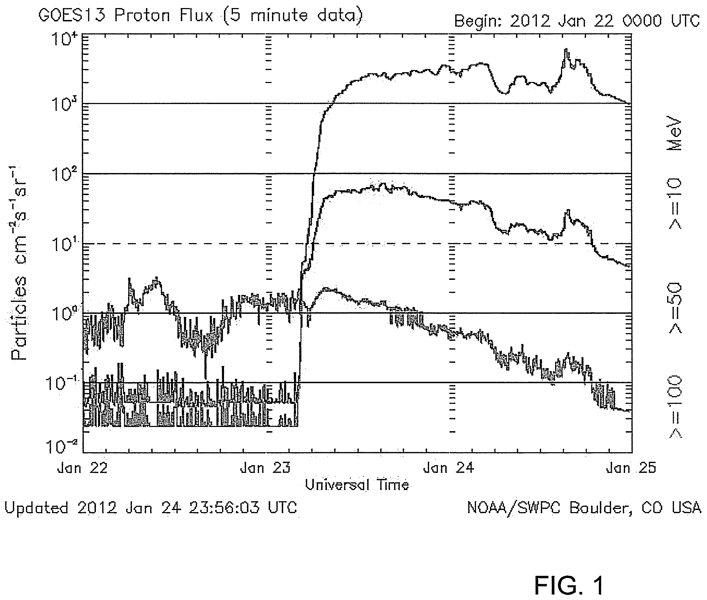

Fig. 1     eine Darstellung des zeitaufgelösten Teilchenflusses an der Position des GOES-13 Satelliten zwischen dem 22. und 25. Januar 2012, wobei die unterste Kurve den Teilchenfluss der Protonen mit einer Energie von mehr als 100 MeV, die mittlere Kurve den Teilchenfluss der Protonen mit einer Energie von mehr als 50 MeV und die oberste Kurve den Teilchenfluss der Protonen mit einer Energie von mehr als 10 MeV zeigt,

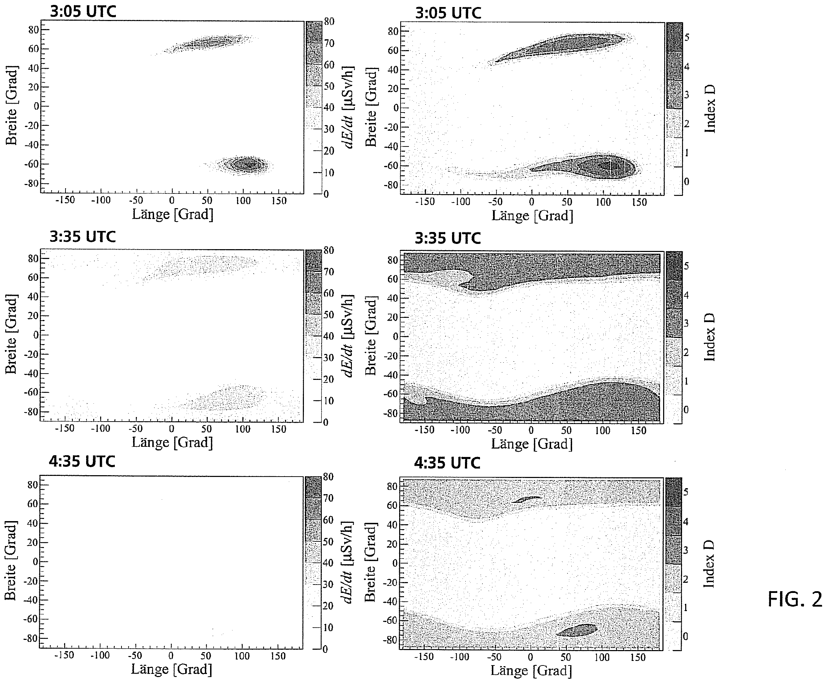

Fig. 2     die berechneten Raten der effektiven Dosis dE/dt (linke Seite) und die entsprechenden erfindungsgemäßen Indizes (rechte Seite) zu verschiedenen Zeitpunkten während des GLE70 am 13. Dezember 2006: kurz nach Beginn des Ereignisses (3:05 UTC) und eine halbe Stunde (3:35 UTC) bzw. eineinhalb Stunden (4:35 UTC) nach Beginn des Ereignisses (Hinweis: Urheberrecht der Weltkarte liegt bei der NASA), und

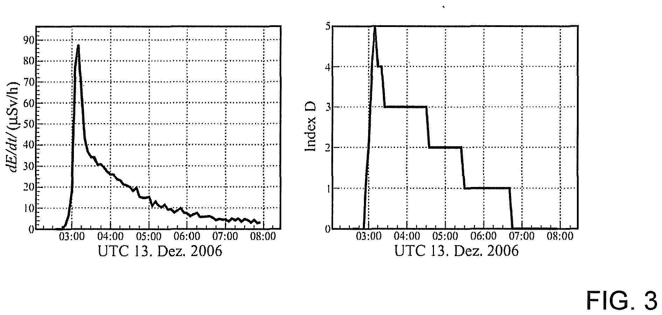

Fig. 3     die Raten der effektiven Dosis dE/dt (linke Seite) und der entsprechende erfindungsgemäße Index D (rechte Seite) während des GLE70 am 13. Dezember 2006 berechnet für den Ort des Maximums der Strahlenexposition in der nördlichen Hemisphäre (70°N, 50°E) auf FL410.

Die zuverlässige Feststellung einer globalen und regionalen Warnsituation bei dosisrelevanten Weltraumwetter Ereignissen erfordert eine ortsaufgelöste Abschätzung des gesamten Strahlungsfeldes auf Reiseflughöhen in der Erdatmosphäre unter Angabe der entsprechenden Rate der Effektiven Dosis (dE/dt in μSv/h). Darüber hinaus erlaubt diese Methode auch die Berücksichtigung der entsprechenden Dosisrate durch die galaktische, kosmische Strahlung, wodurch die zusätzliche Komponente $\dot{E}_{sol}$ durch solare Beiträge sogar isoliert erfasst werden kann. Eine sowohl für den Strahlenschutz als auch für die Festlegung von Handlungsoptionen geeignete Skala für entsprechende Warnungen kann dabei durch Überschreiten festgelegter Schwellen von $\dot{E}_{sol}$ konstruiert werden:

$$\dot{E}_{sol} = 2{,}5\frac{\mu Sv}{h} \cdot 2^D$$

Der entsprechende Index D (Dosisrate) für Dosisraten über 5 μSv/h ist dann durch den jeweiligen Exponenten zur Basis 2 gegeben. Werte unterhalb von 5 μSv/h werden per Definition mit dem Index 0 klassifiziert:

| Index D | Dosisrate μSv/h |
|---------|-----------------|
| 0 | <5 |
| 1 | 5 |
| 2 | 10 |
| 3 | 20 |
| 4 | 40 |
| 5 | 80 |
| 6 | 160 |
| 7 | 320 |
| 8 | 640 |

Anhand des dosisratenbasierten Index D kann für jeden Punkt auf einem ortsaufgelösten Gitternetz der Erde eine lokale Warnsituation unter Berücksichtigung der Flughöhe beschrieben werden. Bei einer verallgemeinerten lokalen Warnung wird als Worst-Case-Szenario eine barometrische Flughöhe von 41000 Fuß (FL410) angenommen.

Die daraus abgeleitete globale Warnstufe entspricht dann dem Maximum der verallgemeinerten lokalen Warnungen.

Grundlage für die Abschätzung des Strahlungsfeldes auf Reiseflughöhen während eines solaren Strahlungsausbruchs bildet ein Modell zur Konstruktion des jeweiligen Primärflusses und Energiespektrums durch zeitnahe Auswertung von Neutronenmonitordaten verschiedener geografischer Positionen und von Satellitendaten sowie eine Abschätzung der zeitlichen Entwicklung des Ereignisses. Dieses Energiespektrum einfallender solarer Teilchen wird anschließend als Eingabeparameter für ein atmosphärisches Strahlungsmodell verwendet, welches die Abschätzung von Dosisraten auf einem Gittermodell der Erdatmosphäre erlaubt.

Der Vorteil gegenüber dem Stand der Technik ist offensichtlich. Luftverkehrsgesellschaften können betriebliche Maßnahmen zum Strahlenschutz von Passagieren und Personal festlegen und angemessen in Abhängigkeit der jeweiligen Weltraumwettersituation reagieren. So kann es zum Beispiel bei Ereignissen auf hohen geomagnetischen Breiten und großen Flughöhen zu signifikanten Anstiegen in der Dosisrate kommen, bei denen eine Änderung der Flugroute zur Dosisreduktion führt, während zur gleichen Zeit bei geringeren geomagnetischen Breiten oder auf geringeren Flughöhen keine erhöhte Exposition auftritt und eine Änderung der Flugroute keine dosisreduzierende Wirkung hat.

Am 23. Januar 2012 fand ein solarer Strahlungsausbruch statt, der auf der entsprechenden NOAA S-Skala über einen Zeitraum von ungefähr 36 Stunden als sogenannte S3-Warnung eingestuft wurde (Fig. 1). Dies führte bei einigen Luftfahrtunternehmen zu Maßnahmen, beispielsweise zur treibstoffintensiven Reduktion der Flughöhe, Änderung der Flugroute, etc., die mit erheblichen Kosten verbunden waren. Darüber hinaus war festzustellen, dass das betroffene Flugpersonal entsprechend verunsichert war bzw. wurde. Eine zeitnahe Bewertung auf der Grundlage des erfindungsgemäßen Verfahrens hätte zu der Feststellung geführt, dass diese Maßnahmen nicht erforderlich gewesen wären, da der dosisratenbasierte Index D für dieses Ereignis bei 0 gelegen hätte.

Am 13. Dezember 2006 fand das GLE70 statt, das aufgrund der von GOES gemessenen integralen Protonenflüsse mit einer S2-Warnung verbunden war. Anders als das höher eingestufte S3 Ereignis im Januar 2012 war das GLE70 mit einem signifikanten Fluss von hochenergetischen Teilchen verbunden, deren Wechselwirkungen in der Atmosphäre auch am Erdboden nachgewiesen werden konnten. Im Gegensatz zu dem Ereignis im Januar 2012 war das GLE70 für die Strahlenexposition auf Reiseflughöhen relevant. Fig. 2 zeigt die berechneten Raten der Effektiven Dosis auf FL410 zu drei Zeitpunkten kurz nach Beginn des Ereignisses (3:05 UTC) und eine halbe bzw. eineinhalb Stunden nach Beginn des Ereignisses (linke Seite von Fig. 2). Die rechte Seite der Fig. 2 zeigt die weltweite, durch den oben beschriebenen Index D quantifizierte Relevanz des Ereignisses bezüglich der Strahlenexposition in der Luftfahrt. Es ist deutlich zu erkennen, dass die Strahlenexposition und damit die Relevanz des Ereignisses sowohl eine zeitliche als auch örtliche Abhängigkeit zeigt. So war zu keinem Zeitpunkt eine Erhöhung der Strahlenexposition im Breitengradbereich zwischen 40°S und 40°N zu erwarten. Weiterhin war insbesondere zu Beginn des Ereignisses, als die höchsten Dosisraten auftraten, die Erhöhung der Strahlenexposition im Wesentlichen auf die östliche Hemisphäre beschränkt. Mit Hilfe des wie in Fig. 2 dargestellten Indices ist somit während des Ereignisses eine optimale Anpassung betroffener Flugrouten möglich und unnötige Belastungen für den Flugverkehr können vermieden werden. Dies gilt insbesondere auch, wenn zusätzlich zu den hier dargestellten Worst-Case Betrachtungen für FL410 zusätzlich niedrigere Flughöhen in die Analyse miteinbezogen werden. Fig. 3 zeigt den Verlauf der Rate der Effektiven Dosis (linke Seite, Fig. 3) auf FL410 bei den Koordinaten (70°N, 50°E), wo das Maximum der Dosisrate auf der nördlichen Hemisphäre zu Beginn des Ereignisses (3:05 UTC) berechnet wurde, und den entsprechenden Index D (rechte Seite, Fig. 3) über den Verlauf des Ereignisses. Es zeigt sich, dass kurz nach Beginn des Ereignisses kurzeitig eine Dosisrate zu erwarten war, die einem Index D=5 entsprach.

Die Erfindung ist vornehmlich zur Implementation in die Betriebsabläufe von Luftverkehrsgesellschaften gedacht. Die um das beschriebene Verfahren verbesserten Betriebsabläufe würden zu einer angemessenen Berücksichtigung dosisrelevanter solarer Strahlungsausbrüche führen und somit einen sinnvollen Ansatzpunkt zur Umsetzung des §94 StrlSchV bieten. Die Anwendung dieses Verfahrens könnte ggf. sogar rechtlich geregelt werden.

**Patentansprüche**

1. Verfahren zur Bereitstellung von Handlungsempfehlungen von Luftverkehrsgesellschaften für das Flugpersonal bei einer Warnung vor strahlendosisrelevanten Weltraumwetterereignissen auf Reiseflughöhen, mit den folgenden Schritten:

   - Erfassen von Strahlungsdaten der atmosphärischen Strahlung, insbesondere der ionisierenden Strahlung in der Atmosphäre,
   - Bereitstellen eines Strahlungsmodells zur 3D-ortsaufgelösten Abschätzung eines Strahlungsfeldes auf Reiseflughöhen der Erdatmosphäre mit einer auf einem kontinuierlichen Wertebereich basierenden Strahlendosisratenskala,
   - Abschätzen der 3D-ortsaufgelösten Raten der effektiven Strahlendosis anhand der erfassten Strahlungsdaten und des Strahlungsmodells,
   - Einteilen der auf einem kontinuierlichen Wertebereich basierenden Strahlendosisratenskala in eine diskrete, d.h. abgestufte Strahlendosisratenskala mit einzelnen, sich aneinander anschließenden Wertebereichen größer werdender Strahlendosisraten und Zuordnen jeweils eines Indices zu jedem Wertebereich, wobei ein erster Wertebereich zwischen einer Strahlendosisrate von Null und einer vorgebbaren ersten Obergrenze liegt, ein zweiter Wertebereich zwischen der ersten Obergrenze und einer zweiten Obergrenze liegt, die gleich einem vorgebbaren Vielfachen der ersten Obergrenze ist, und jeder weitere Wertebereich zwischen der Obergrenze des nächst kleineren Wertebereichs und einer Obergrenze liegt, die gleich dem vorgebbaren Vielfachen der Obergrenze des nächst kleineren Wertebereichs ist, und
   - wobei als Warnung der Index desjenigen Wertebereichs angegeben wird, innerhalb dessen die abgeschätzte Strahlendosisrate für einen vorgebbaren Bereich innerhalb der Erdatmosphäre liegt,
   - Bereitstellen einer Handlungsanweisung für das Flugpersonal in Abhängigkeit von dem Index und unter Berücksichtigung operationeller Betriebsparameter zum Zweck des Strahlenschutzes und der Strahlendosisreduzierung.

2. Verfahren nach Anspruch 1, **dadurch gekennzeichnet, dass** als Vielfaches eine natürliche Zahl, insbesondere die Zahl 2 oder 3 gewählt wird.

3. Verfahren nach Anspruch 1 oder 2, **dadurch gekennzeichnet, dass** zur Erfassung der Strahlungsdaten satelliten-, luft- und/oder bodengestützte Messinstrumente bereitgestellt werden.

4. Verfahren nach einem der Ansprüche 1 bis 3, **dadurch gekennzeichnet, dass** das Strahlungsmodell ein dynamisches Modell ist, das quantitative Information bezüglich der Strahlungsintensität und deren zeitlicher Veränderung enthält.

5. Verfahren nach einem der Ansprüche 1 bis 4, **dadurch gekennzeichnet, dass** anhand des Strahlungsmodells aus den Strahlungsdaten auf ein Energiespektrum der Teilchen eines strahlendosisrelevanten Ereignisses geschlossen wird.

6. Verfahren nach einem der Ansprüche 1 bis 5, **dadurch gekennzeichnet, dass** das Erfassen der Strahlungsdaten durch Messdaten, insbesondere durch aktuelle Messdaten erfolgt.

7. Verfahren nach einem der Ansprüche 1 bis 6, **dadurch gekennzeichnet, dass** der Index für den betreffenden Bereich innerhalb der Erdatmosphäre als lokaler Warnindex verwendet wird.

8. Verfahren nach einem der Ansprüche 1 bis 7, **dadurch gekennzeichnet, dass** der maximale Index der Indices für eine Vielzahl von Bereichen der Erdatmosphäre, insbesondere für sämtliche Bereiche der Erdatmosphäre als globaler Warnindex verwendet wird.

**Claims**

1. A method for providing recommendations for actions by airline companies for the flight staff in the case of a warning of radiation-dose-relevant spaceweather events at cruising altitudes, said method comprising the following steps:

- detecting radiation data of the atmospheric radiation, particularly of the ionized radiation in the atmosphere,
- providing a radiation model for 3D-spatially resolved estimation of a radiation field at cruising altitudes of the earth's atmosphere by use of a radiation dose rate scale based on a continuous range of values,
- estimation of the 3D-spatially resolved rates of the effective radiation dose on the basis of the detected radiation data and the radiation model,
- dividing said radiation dose rate scale based on a continuous range of values into a discrete, i.e. graduated radiation dose rate scale comprising individual successive ranges of values of increasing radiation dose rates, and assigning respectively one index to each range of values, wherein a first range of values is between a radiation dose rate of zero and a presettable first upper limit, a second range of values is between the first upper limit and a second upper limit which is equal to a presettable multiple of the first upper limit, and each further range of values is between the upper limit of the next smaller range of values and an upper limit which is equal to the presettable multiple of the upper limit of the next smaller range of values, and
- as a warning, there is indicated the index of that range of values within which is situated the estimated radiation dose rate for a presettable range in the earth's atmosphere,
- providing a recommendation for actions for the flight staff in dependence on the index and in consideration of operational operating parameters for the purpose of radiation protection and radiation dose reduction.

2. The method according to claim 1, **characterized in that**, as said multiple, a natural number, particularly the number 2 or 3 is selected.

3. The method according to claim 1 or 2, **characterized in that**, for detection of the radiation data, satellite-, air- and/or ground-based measurement instruments are provided.

4. The method according to one of claims 1 to 3, **characterized in that** the radiation model is a dynamic model which includes quantitative information with respect to the radiation intensity and its change over time.

5. The method according to one of claims 1 to 4, **characterized in that**, with the aid of the radiation model, conclusions are drawn from the radiation data on an energy spectrum of the particles of a radiation-dose-relevant event.

6. The method according to one of claims 1 to 5, **characterized in that** the detection of the radiation data is performed on the basis of measurement data, particularly current measurement data.

7. The method according to one of claims 1 to 6, **characterized in that** the index for the respective range within the earth's atmosphere is used as a local warning index.

8. The method according to one of claims 1 to 7, **characterized in that** the maximum index of the indices is used as a global warning index for a plurality of regions of the earth's atmosphere, particularly for all regions of the earth's atmosphere.

**Revendications**

1. Procédé de préparation de recommandations de traitement par des sociétés de transport aériens pour le personnel navigant lors d'un avertissement contre des événements significatifs pour les doses de rayonnement à des altitudes de croisière, avec les étapes suivantes :

- saisie de données radiatives des rayonnements atmosphériques, en particulier des rayonnements ionisants dans l'atmosphère,
- préparation d'un modèle de rayonnement pour l'estimation résolue spatialement en 3D d'un champ de rayonnement à des altitudes de croisière de l'atmosphère terrestre avec une échelle de dose de rayonnement basée sur une gamme de valeurs continue,
- estimation résolue spatialement en 3D de la dose de rayonnement effective à l'aide des données radiatives saisies et du modèle de rayonnement,
- division de l'échelle de dose de rayonnement basée sur une gamme de valeurs continue en une échelle de dose de rayonnement discrète, c'est-à-dire gradée avec des gammes de valeurs individuelles, contiguës les unes aux autres, de dose de rayonnement croissante, et association d'un indice à chaque gamme de valeurs respective, dans lequel une première gamme de valeurs est située entre une irradiation nulle et une première borne supérieure prédéfinissable, une deuxième gamme de valeurs est située entre la première borne supérieure et une deuxième borne supérieure, laquelle est égale à un multiple prédéfinissable de la première borne supérieure, et chaque gamme de valeurs ultérieure est située entre la borne supérieure de la gamme de valeurs immédiatement inférieure et une borne supérieure égale à un multiple prédéfinissable de la gamme de valeurs immédiatement inférieure, et

- dans lequel l'indice de la gamme de valeurs à l'intérieur de laquelle se trouve la dose de rayonnement évaluée pour une zone prédéfinissable à l'intérieur de l'atmosphère terrestre est donné en tant qu'avertissement,

- préparation d'une instruction de traitement pour le personnel navigant en fonction de l'indice et en prenant en compte des paramètres opérationnels à fins de protection contre les rayonnement et de réduction de la dose de rayonnement.

2. Procédé selon la revendication 1, **caractérisé en ce qu'**un entier naturel, en particulier le nombre 2 ou 3 est sélectionné comme multiple.

3. Procédé selon la revendication 1 ou 2, **caractérisé en ce que** des instruments de mesure sur satellite, aéroportés et/ou terrestres sont préparés pour la saisie des données radiatives.

4. Procédé selon l'une des revendications 1 à 3, **caractérisé en ce que** le modèle de rayonnement est un modèle dynamique, contenant des informations quantitatives par rapport à l'intensité du rayonnement et à la variation temporelle de celle-ci.

5. Procédé selon l'une des revendications 1 à 4, **caractérisé en ce qu'**à l'aide du modèle de rayonnement, un spectre d'énergie des particules d'un événement significatif pour les doses de rayonnement est déduit des données radiatives.

6. Procédé selon l'une des revendications 1 à 5, **caractérisé en ce que** la saisie des données radiatives s'effectue par des données de mesure, en particulier des données de mesure actuelles.

7. Procédé selon l'une des revendications 1 à 6, **caractérisé en ce que** l'indice pour la zone concernée à l'intérieur de l'atmosphère terrestre est utilisé comme indice d'alerte local.

8. Procédé selon l'une des revendications 1 à 7, **caractérisé en ce que** l'indice maximal des indices pour une pluralité de zones de l'atmosphère terrestre, en particulier pour la totalité des zones de l'atmosphère terrestre, est utilisé comme indice d'alerte global.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DANIEL MATTHIÄ.** *The radiation environment in the lower atmosphere - A numerical approach, Dissertation,* 2009
- **I. CLAIRAND et al.** Radiation Protection Dosimetry. *THE SIEVERT SYSTEM FOR AIRCREW DOSIMETRY,* 2009, vol. 136 (4), 282-285
- **D. MATTHIÄ et al.** *Temporal and spatial evolution of the solar energetic particle event,* 20. Januar 2005
- *Journal of Geophysical Research,* 2009, vol. 114